# EUROPEAN PATENT APPLICATION

(11) **EP 2 843 796 A1**
(43) Date of publication of application: **04.03.2015**
(21) Application number: 14181065.5
(22) Date of filing: 14.08.2014
(51) Int. Cl.: H02J 7/00, B60L 11/18, H01M 10/44

(54) **Battery management system and method**

(30) Priority: 27.08.2013 CN 201310378993
(71) Applicant: General Electric Company, Schenectady, New York 12345 (US)
(72) Inventor: Mao, Saijun, 201203 ShangHai (CN)
(74) Representative: Illingworth-Law, William Illingworth

(57) **Abstract**

A system 100 includes a plurality of units U₁,U₂,U₃. Each of the plurality of units U₁,U₂,U₃ has an energy storage element B₁,B₂.B₃, a branch switch S₁,S₂,S₃ and a branch diode D₁,D₂,D₃, which are connected in series. The system 100 further includes a transformer 102 which has a primary side and a secondary side and functions as an equalizer for at least one of charging and discharging the energy storage elements B₁,B₂,B3 to achieve equalization. The plurality of units U₁,U₂,U₃ are connected to the primary side through a control switch S_{N+1} and isolated from a secondary circuit 104 connected to the secondary side.

## Description

Batteries are the most common electrical energy storage devices for electric vehicle, medical instruments, uninterruptible power supply, and other industrial applications. In use, when a potential higher than a basic potential of a battery is needed, it is common to use a plurality of batteries which are connected in series. However, even though the batteries are produced with the same structure via a typical production method using the same anode, cathode and electrolyte material, a difference in charging or discharging (and self-discharging) characteristics exists between each of the batteries connected in series. Thus there is a potential difference between the series-connected batteries, which may cause a problem of unbalanced charging. For example, as the potentials of the series-connected batteries are different from each other, some batteries may reach a prescribed voltage when some other batteries do not reach the prescribed voltage, and therefore an overcharge or undercharge problem or even both overcharge and undercharge problems may be caused during charging the series-connected battery string.

An overcharged battery may have high risk of explosion if the chemistry of the battery cannot withstand overcharged state, whereas an undercharged battery may reduce the life cycle of the series-connected battery string. Therefore, it is needed to address the unbalanced charging problem for the series connected battery string. A common method is to use charge equalization devices to achieve charge equalization for the series-connected battery string.

However, in order to balance a large number of batteries, the equalization device may be large in size and high in cost. Therefore, it is desired to provide a balancing method for a large number of batteries, which is compact and low cost.

In accordance with an embodiment disclosed herein, a system includes a plurality of units. Each of the plurality of units has an energy storage element, a branch switch and a branch diode. The system further includes a transformer which has a primary side and a secondary side and functions as an equalizer for at least one of charging and discharging the energy storage elements to achieve equalization. The plurality of units are connected to the primary side through a control switch and isolated from a secondary circuit connected to the secondary side.

In accordance with another embodiment disclosed herein, a system includes a transformer comprising a primary side and a secondary side, and a plurality of branch diodes series connected to the primary side through a control switch and isolated from a secondary circuit connected to the secondary side. Each of the plurality of branch diodes is connected in parallel with a branch switch. Once each of the plurality of branch diodes is further connected in parallel with an energy storage element that is series connected to the branch switch, the transformer is capable of at least one of charging and discharging the plurality of energy storage elements connected in parallel with the plurality of branch diodes respectively to achieve charge equalization.

In accordance with yet another embodiment disclosed herein, a system includes a plurality of energy storage elements. Each of the plurality of energy storage elements is coupled to a power conversion unit which interfaces directly with an output of the system and manages charging or discharging power of the energy storage element.

In accordance with yet another embodiment disclosed herein, a system includes a plurality of power conversion units. Each of the plurality of power conversion units includes integration of a power electronics circuit for regulating bi-directional power flow between an energy storage element and the output of the system and a balancing circuit for managing charging or discharging power of the energy storage element to achieve charge equalization. The plurality of power conversion units connected with each other. Once each of the plurality of power conversion units is coupled to an energy storage element, it is able to interface directly with an output of the system and manages charging or discharging power of the energy storage element.

Various features, aspects, and advantages of the present invention will become better understood when the following detailed description is read with reference to the accompanying drawings in which like characters represent like parts throughout the drawings, wherein:
FIG. 1 is a diagram showing an example of a battery system having a plurality of battery units connected to a primary side of a transformer, according to one embodiment of the present invention.
FIG. 2 is a diagram showing an example of a battery system having a plurality of the batteries each coupled with an integrated power conversion unit and outputting a DC voltage, according to one embodiment of the present invention.
FIG. 3 is a diagram showing an example of a battery system having a plurality of the batteries each coupled with an integrated power conversion unit and outputting an AC voltage, according to one embodiment of the present invention.
FIG. 4 is a diagram showing passive components of a battery system integrated with embedded dielectric material.

Unless defined otherwise, technical and scientific terms used herein have the same meaning as is commonly understood by one of ordinary skill in the art to which this invention belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced items. Moreover, the terms "coupled" and "connected" are not intended to distinguish between a direct or indirect coupling/connection between two components. Rather, such components may be directly or indirectly coupled/connected unless otherwise indicated.

Embodiments of the invention provide low volume electronic systems. In accordance with some embodiments, a plurality of energy storage elements such as batteries may be connected to a multi-input flyback transformer, such that the transformer which functions as an equalizer for at least one of charging and discharging the energy storage elements to achieve equalization. In accordance with some embodiments, a plurality of energy storage elements such as batteries may be each coupled with a power conversion unit, which is capable of both regulating bi-directional power flow between the energy storage element and the output of the whole system and managing charging or discharging power of the energy storage element to achieve charge equalization. Cost effective and high performance charge equalization solutions are provided for multiple energy storage elements in the embodiments as discussed above. As the solutions are particularly applicable in battery systems, which have, for example, series-connected batteries, the following description is directed to battery systems, but can be used in other systems including energy storage elements other than batteries.

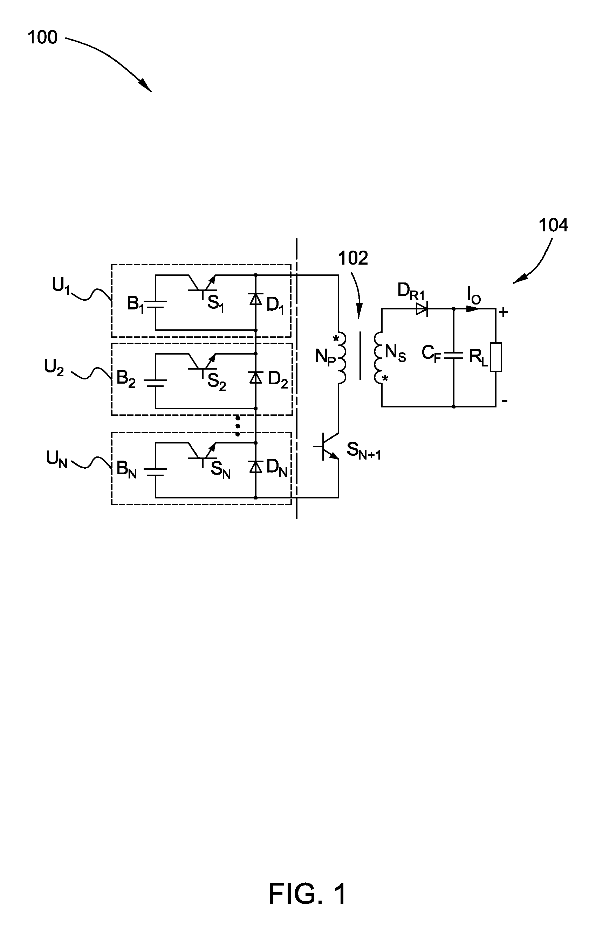

In some embodiments, referring to FIG. 1, a battery system 100 comprises a plurality of battery units (U₁, U₂, ..., U_{N}). Each of the battery units has a battery (B₁, B₂, ..., or B_{N}), a branch switch (S₁, S₂, ..., or S_{N}), and a branch diode (D₁, D₂, ..., or D_{N}), which are connected in series. The battery system 100 further comprises a transformer 102 which functions as an equalizer for at least one of charging and discharging the batteries to achieve charge equalization. The transformer 102 has a primary side (N_{P}) and a secondary side (N_{S}). The battery units U₁, U₂, ..., and U_{N} are connected to the primary side N_{P} of the transformer 102 through a control switch (S_{N+1}) and isolated from a secondary circuit 104 connected to the secondary side N_{S} of the transformer 102.

The battery units U₁, U₂, ..., and U_{N} may be series connected to the primary side N_{P} of the transformer 102 through the control switch S_{N+1}. As illustrated, for each battery unit, the battery and branch switch are connected in series with each other, and the series connected battery and branch are connected in parallel with the corresponding branch diode. The branch diodes D₁, D₂, ..., and D_{N} of the plurality of battery units are series connected to the primary side N_{P} of the transformer 102 through the control switch S_{N+1}. The branch switches interact with the control switch to have one of the battery units charged/discharged by the transformer 102 at a time.

The transformer may be a flyback transformer. In some embodiments, the transformer 102 is a multi-input flyback transformer. There are multiple inputs for the transformer 102 such that the plurality of battery units can be connected to the primary side N_{P} of the transformer 102. The secondary side N_{S} of the transformer 102 is a single winding output which can be connected to a secondary circuit 104. In some embodiments, the secondary circuit 104 is a battery module. In a specific embodiment as illustrated, the secondary circuit 104 comprises a diode D_{R1}, a capacitor C_{F}, and a resistor R_{L}. The capacitor C_{F}, and resistor R_{L} are parallel connected and then connected to the secondary side N_{S} of the transformer 102.

Either of the branch switch and the control switch, or both of them may be an NPN-type transistor.

In implementations, the batteries and the other parts of the system 100 can be produced or provided separately. For example, in some implementations, a system without batteries, but which can be coupled into the batteries to achieve the function as described above may be provided. The system may include some or all parts of the battery system 100 except the batteries. For example, the system may include a transformer having a primary side and a secondary side, and a plurality of branch diodes series connected to the primary side through a control switch and isolated from a secondary circuit connected to the secondary side. Each of the plurality of branch diodes is connected in parallel with a branch switch. Once each of the plurality of branch diodes is further connected in parallel with an energy storage element such as a battery, that is series connected to the branch switch, the transformer is capable of at least one of charging and discharging the plurality of energy storage elements connected in parallel with the plurality of branch diodes respectively to achieve charge equalization.

In some other embodiments, a battery system having a plurality of batteries, each coupled with a power conversion unit which interfaces directly with output of the battery system and manages charging or discharging power of the battery is provided.

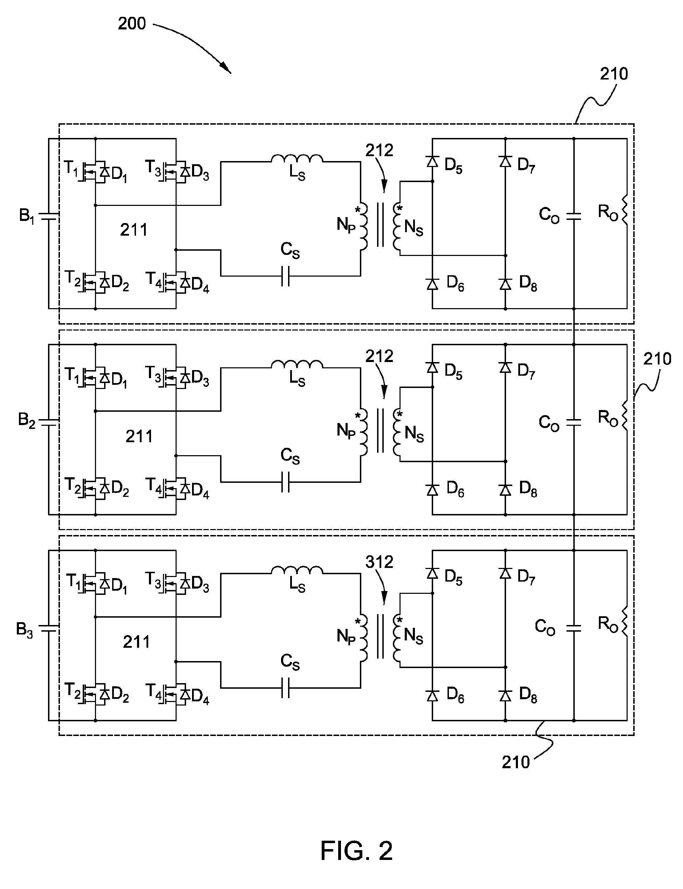

Referring to FIG. 2, an exemplary battery system 200 comprising three batteries (B₁, B₂ and B₃) and having a direct current (DC) output is provided. In the system 200, each of the batteries is coupled with a power conversion unit 210. The power conversion unit 210 is integration of a power electronic circuit for regulating bi-directional power flow between the battery and the output of the battery system and a battery balancing circuit for managing charging or discharging power of the battery to achieve charge equalization, and can interface directly with output of the battery system and manage charging or discharging power of the battery. As such the power conversion unit 210 has an integrated function of both an energy management system (EMS) and a battery management system (BMS). As used herein, "EMS" typically refers to a system of computer-aided tools used to monitor, control, and optimize the performance of the power generation and/or transmission system, and "BMS" typically refers to an electronic system that manages a rechargeable battery (cell or battery pack), such as by monitoring its state, calculating secondary data, reporting the data, controlling its environment, and/or balancing it.

The power conversion unit 210 for each battery may comprise a switch module 211 connected in parallel with the battery and a transformer 212 for isolating the battery and switch module from a secondary circuit 213 for converting an alternate current (AC) voltage to a DC voltage. In some embodiments, the switch module 211 comprises at least four switch devices, each having a transistor (T₁, T₂, T₃, or T₄) and a diode (D₁, D₂, D₃, or D₄) parallel connected to the transistor. The transistors T₁, T₂, T₃, and T₄ may be selected from the group consisting of metal-oxide-semiconductor field effect transistors, insulated gate bipolar transistors, and bipolar-junction transistors. As illustrated, the battery B₁, B₂ or B₃ and its corresponding switch module 211 are connected to a primary side of a full bridge transformer 212, which has a secondary circuit 213 coupled to a secondary side thereof. The output of full bridge transformer 212 can be connected in series to provide a higher DC output voltage, for example, 300-400V for electric vehicle, and 700-800V for storage energy for medical instruments such as CT, MRI and X-ray applications. In the specific embodiment as illustrated, the secondary circuit 213 comprises four diodes D₅, D₆, D₇ and D₈, a capacitor C_{O}, and a resistor R_{O}. The four diodes D₅, D₆, D₇ and D₈ constitute a diode bridge, which is connected with the capacitor C_{O} and resistor R_{O} in parallel.

The transformer 212 not only takes the BMS balancing function for battery charge and discharge equalization, but also takes the responsibility as an EMS power regulator. The BMS balancing and EMS power regulator functions are realized by either phase shift control or frequency control, or combined phase shift control and frequency control strategy of the full bridge transformer 212.

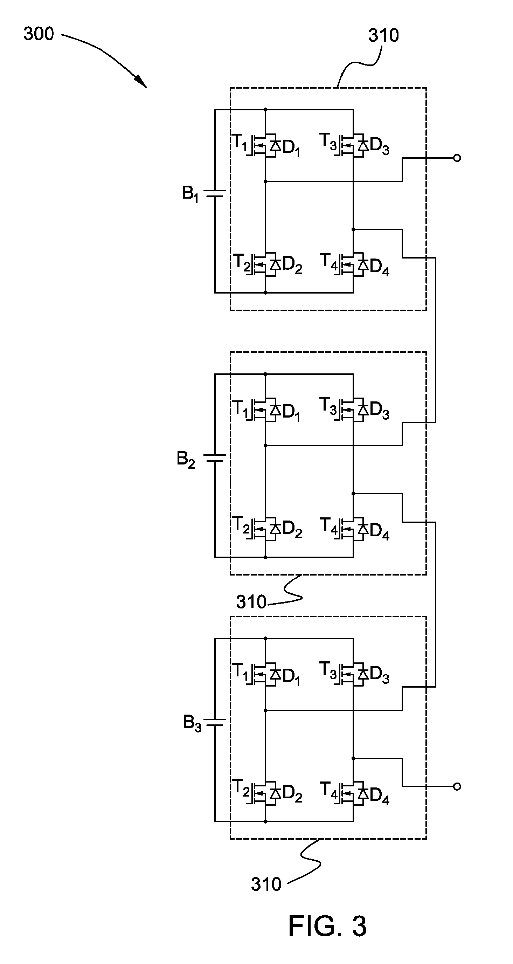

Referring to FIG. 3, an exemplary battery system 300 comprising three batteries (B₁, B₂ and B₃) and having an AC output is provided. In the system 300, each of the batteries is coupled with a power conversion unit 310, which has an integrated BMS and EMS function, and can interface directly with output of the battery system and manage charging or discharging power of the battery. In the specific embodiment as illustrated, the power conversion unit 310 for each battery comprises a switch module 311. Similar to that in the system 200 as described above, the switch module 311 comprises at least four switch devices, each having a transistor (T₁, T₂, T₃, or T₄) and a diode (D₁, D₂, D₃, or D₄) parallel connected to the transistor. As illustrated, each of batteries is coupled in parallel with a switch module 311 and the switch modules of the batteries are connected in series by connecting their midpoints of legs, to provide an AC voltage high than what a single battery can provide.

Similarly, in implementations, the batteries and the other parts of the system 200 or 300 can be produced or provided separately. For example, in some implementations, a system without batteries, but which can be coupled into the batteries to achieve the function as described above may be provided. The system may include some or all parts of the battery system 200 or 300 except the batteries.

In the battery system as described above, the battery may be a single battery cell or a collection of two or more parallel connected battery cells (battery pack). The diode may is a single diode or a collection of two or more parallel connected diodes (diode pack).

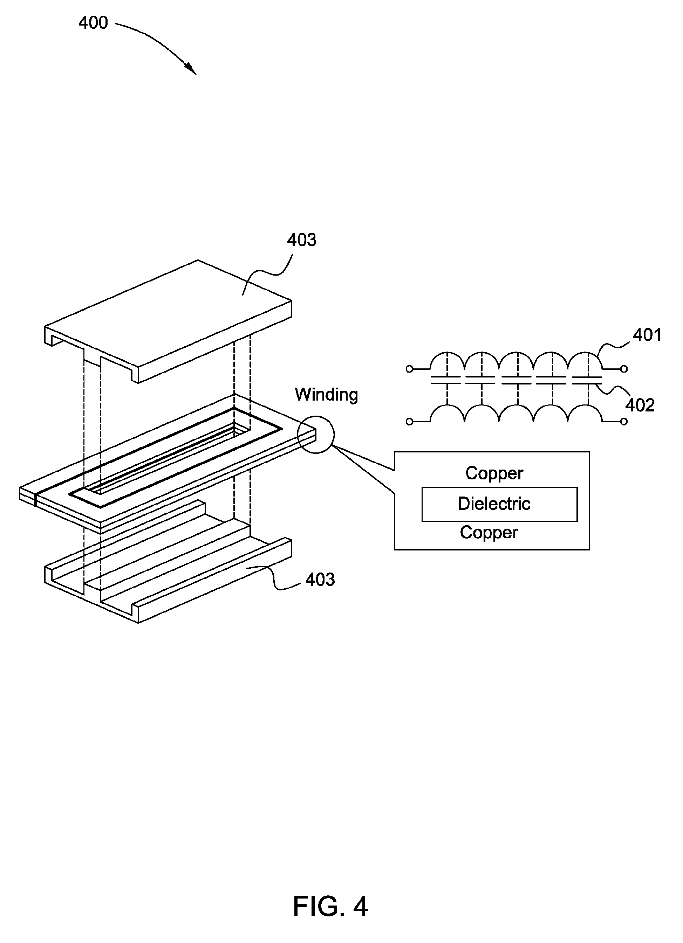

In some embodiments, active electronic components of the battery system, including but not limited to power semiconductor devices, gate driver integrated circuit, sensor, and control electronics, are integrated in a single active application specific integrated circuit, for example, by a silicon or gallium nitride on silicon packaging technology. In some embodiments, passive components of the battery system, including but not limited to two or more discrete inductive components sharing the same magnetic core, and capacitive components, are integrated with an electromagnetic technology, for example, by using embedded dielectric material. The passive components may be integrated by winding the inductive components and capacitor in series or in parallel connection. For example, as illustrated in FIG.4, in a system 400, the passive components including inductors 401 and capacitors 402 are integrated with embedded dielectric material such that they can share a same ferrite core 403.

It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

Various aspects and embodiments of the present invention are defined by the following numbered clauses:
1. A system, comprising:
   a plurality of units, each of which comprises:
      an energy storage element;
      a branch switch; and
      a branch diode; and
      a transformer comprising a primary side and a secondary side and functioning as an equalizer for at least one of charging and discharging the energy storage elements to achieve charge equalization,
      wherein the plurality of units are connected to the primary side through a control switch and isolated from a secondary circuit connected to the secondary side.
2. The system of clause 1, wherein the plurality of branch diodes of the plurality of units are series connected to the primary side through the control switch, and the energy storage element and branch switch of each of the plurality of units are connected in series and connected in parallel with the corresponding branch diode.
3. The system of any preceding clause, wherein the branch switches are configured to interact with the control switch to have the energy storage element of one of the plurality of units at least one of charged and discharged by the transformer at a time.
4. The system of any preceding clause, wherein the transformer comprises a flyback transformer.
5. A system, comprising:
   a transformer comprising a primary side and a secondary side; and
   a plurality of branch diodes series connected to the primary side through a control switch and isolated from a secondary circuit connected to the secondary side,
   wherein each of the plurality of branch diodes is connected in parallel with a branch switch; and
   once each of the plurality of branch diodes is further connected in parallel with an energy storage element that is series connected to the branch switch, the transformer is capable of at least one of charging and discharging the plurality of energy storage elements connected in parallel with the plurality of branch diodes respectively to achieve charge equalization.
6. The system of any preceding clause, wherein the plurality of branch switches connected in parallel with the plurality of branch diodes respectively are configured to interact with the control switch to have one of the plurality of energy storage elements at least one of charged and discharged by the transformer at a time.
7. A system, comprising:
   a plurality of energy storage elements,
   wherein each of the plurality of energy storage elements is coupled to a power conversion unit which interfaces directly with an output of the system and manages charging or discharging power of the energy storage element.
8. The system of any preceding clause, wherein the power conversion unit comprises integration of a power electronic circuit for regulating bi-directional power flow between the energy storage element and the output of the system and a balancing circuit for managing charging or discharging power of the energy storage element to achieve charge equalization.
9. The system of any preceding clause, wherein the power conversion unit comprises at least four transistors selected from a group consisting of metal-oxide-semiconductor field effect transistors, insulated gate bipolar transistors, and bipolar-junction transistors.
10. The system of any preceding clause, wherein each of the plurality of energy storage elements is coupled in parallel with a switch module comprising at least four switch devices, which energy storage element and switch module are isolated by a transformer from a primary circuit for converting an alternate current (AC) voltage to a direct current (DC) voltage.
11. The system of any preceding clause, wherein each of the plurality of energy storage elements is coupled in parallel with a switch module comprising at least four switch devices, and the switch modules of the energy storage elements are connected in series by connecting their midpoints of legs, to provide an AC voltage high than what a single energy storage element can provide.
12. A system, comprising:
   a plurality of power conversion units, each of which comprises integration of:
      a power electronics circuit for regulating bi-directional power flow between an energy storage element and the output of the system; and
      a balancing circuit for managing charging or discharging power of the energy storage element to achieve charge equalization,
      wherein the plurality of power conversion units connected with each other; and
      once each of the plurality of power conversion units is coupled to an energy storage element, it is able to interface directly with an output of the system and manages charging or discharging power of the energy storage element.
13. The system of any preceding clause, wherein active electronic components of the system, comprising power semiconductor devices, gate driver integrated circuit, sensor, and control electronics are integrated in a single active application specific integrated circuit.
14. The system of any preceding clause, wherein the active electronic components are integrated via a silicon or gallium nitride on silicon packaging technology.
15. The system of any preceding clause, wherein passive components of the system, comprising two or more discrete inductive components sharing the same magnetic core, and capacitive components are integrated with an electromagnetic technology.
16. The system of any preceding clause wherein the passive components are integrated with embedded dielectric material
17. The system of any preceding clause, wherein active electronic components of the system, comprising power semiconductor devices, gate driver integrated circuit, sensor and control electronics are integrated in a single active application specific integrated circuit, and passive components of the system, comprising two or more discrete inductive components sharing the same magnetic core, capacitive components are integrated with an electromagnetic technology.
18. The system of any preceding clause, wherein the active electronic components are integrated via a silicon or gallium nitride on silicon packaging technology and the passive components are integrated with embedded dielectric material.

## Claims

1. A system (100), comprising:
a plurality of units (U₁,U₂,U₃), each of which comprises:
an energy storage element (B₁,B₂,B₃);
a branch switch (S₁,S₂,S₃); and
a branch diode (D₁,D₂,D₃); and
a transformer (102) comprising a primary side and a secondary side and functioning as an equalizer for at least one of charging and discharging the energy storage elements to achieve charge equalization,
wherein the plurality of units (U₁,U₂,U₃), are connected to the primary side through a control switch (S_{N+1}) and isolated from a secondary circuit (104) connected to the secondary side.

2. The system (100) of claim 1, wherein the plurality of branch diodes (D₁,D₂,D₃) of the plurality of units are series connected to the primary side through the control switch (S_{N+1}), and the energy storage element (B₁,B₂,B₃) and branch switch of each of the plurality of units are connected in series and connected in parallel with the corresponding branch diode.

3. The system (100) of any preceding claim, wherein the branch switches (S₁,S₂,S₃) are configured to interact with the control switch (S_{N+1}) to have the energy storage element of one of the plurality of units at least one of charged and discharged by the transformer at a time.

4. The system (100) of any preceding claim, wherein the transformer (102) comprises a flyback transformer.

5. A system (100), comprising:
a transformer (102) comprising a primary side and a secondary side; and
a plurality of branch diodes (D₁,D₂,D₃) series connected to the primary side through a control switch and isolated from a secondary circuit connected to the secondary side,
wherein each of the plurality of branch diodes is connected in parallel with a branch switch; and
once each of the plurality of branch diodes is further connected in parallel with an energy storage element that is series connected to the branch switch, the transformer is capable of at least one of charging and discharging the plurality of energy storage elements connected in parallel with the plurality of branch diodes respectively to achieve charge equalization.

6. The system (100) of claim 5, wherein the plurality of branch switches connected in parallel with the plurality of branch diodes respectively are configured to interact with the control switch to have one of the plurality of energy storage elements at least one of charged and discharged by the transformer at a time.

7. A system (100), comprising:
a plurality of energy storage elements (B₁,B₂,B₃),
wherein each of the plurality of energy storage elements is coupled to a power conversion unit (310) which interfaces directly with an output of the system and manages charging or discharging power of the energy storage element.

8. The system (100) of claim 7, wherein the power conversion unit (310) comprises integration of a power electronic circuit for regulating bi-directional power flow between the energy storage element and the output of the system and a balancing circuit for managing charging or discharging power of the energy storage element to achieve charge equalization.

9. The system (100) of claim 7 or claim 8, wherein the power conversion (310) unit comprises at least four transistors selected from a group consisting of metal-oxide-semiconductor field effect transistors, insulated gate bipolar transistors, and bipolar-junction transistors.

10. The system (100) of any of claims 7 to 9, wherein each of the plurality of energy storage elements is coupled in parallel with a switch module comprising at least four switch devices, which energy storage element and switch module are isolated by a transformer from a primary circuit for converting an alternate current (AC) voltage to a direct current (DC) voltage.

11. The system (100) of any of claims 7 to 10, wherein each of the plurality of energy storage elements is coupled in parallel with a switch module comprising at least four switch devices, and the switch modules of the energy storage elements are connected in series by connecting their midpoints of legs, to provide an AC voltage high than what a single energy storage element can provide.

12. A system (100), comprising:
a plurality of power conversion units, each of which comprises integration of:
a power electronics circuit for regulating bi-directional power flow between an energy storage element and the output of the system; and
a balancing circuit for managing charging or discharging power of the energy storage element to achieve charge equalization,
wherein the plurality of power conversion units connected with each other; and
once each of the plurality of power conversion units is coupled to an energy storage element, it is able to interface directly with an output of the system and manages charging or discharging power of the energy storage element.

13. The system (100) of any preceding claim, wherein active electronic components of the system, comprising power semiconductor devices, gate driver integrated circuit, sensor, and control electronics are integrated in a single active application specific integrated circuit.

14. The system (100) of any preceding claim, wherein passive components of the system, comprising two or more discrete inductive components sharing the same magnetic core, and capacitive components are integrated with an electromagnetic technology.

15. The system (100) of any preceding claim, wherein active electronic components of the system, comprising power semiconductor devices, gate driver integrated circuit, sensor and control electronics are integrated in a single active application specific integrated circuit, and passive components of the system, comprising two or more discrete inductive components sharing the same magnetic core, capacitive components are integrated with an electromagnetic technology.
